# EUROPÄISCHE PATENTSCHRIFT

(11) **EP 4 353 566 B1**
(45) Veröffentlichungstag und Bekanntmachung des Hinweises auf die Patenterteilung: **14.01.2026**
(21) Anmeldenummer: 23202341.6
(22) Anmeldetag: 09.10.2023
(51) Int. Cl.: B62B 3/14, B62B 5/00, G01G 19/414, G06Q 20/20, G07G 1/00

(54) **STAPELBARER EINKAUFSWAGEN**
NESTABLE SHOPPING TROLLEY
CHARIOT D'ACHAT EMBOÎTABLE

(30) Priorität: 11.10.2022 DE 202022105740 U; 12.01.2023 DE 202023100145 U
(43) Veröffentlichungstag der Anmeldung: 17.04.2024
(73) Patentinhaber: J.D. Geck GmbH, 58762 Altena (DE)
(72) Erfinder: Kroker, Thomas, 58762 Altena (DE)
(74) Vertreter: Tarvenkorn, Oliver

(56) Entgegenhaltungen:
- EP-A2- 2 284 062
- DE-A1- 102018 132 059
- DE-U1- 202018 000 661
- US-A1- 2021 117 950

## Beschreibung

Die Erfindung betrifft einen stapelbaren Einkaufswagen mit den Merkmalen des Oberbegriffs des Anspruchs 1.

Ein solcher Einkaufswagen mit einer Wiegefunktion und zwei Einkaufsartikelaufnahmen ist in der DE 10 2018 132 059 A1 beschrieben. Durch Verbindung einer oberen, als Korb ausgebildeten Einkaufsartikelaufnahme und einer unteren Einkaufsartikelaufnahme mit einer hinten hochschwenkbaren Ablagefläche wird eine vom Fahrgestell separierte Einkaufsartikelaufnahmeeinheit geschaffen, so dass für alle oben oder unten ein- oder aufgelegten Waren das Gewicht mit demselben Satz von Sensoren gemessen werden kann. Damit mehrere gleichartige Einkaufswagen ineinandergeschoben werden können, also stapelbar sind, besitzt die obere Einkaufsartikelaufnahme eine schwenkbar gelagerte Rückwandklappe und die unteren Einkaufsartikelaufnahme einen Ablagerahmen, in dem ein Ablageelement mit einer Ablagefläche so befestigt ist, dass sie beim Stapeln um eine vordere Achse schwenken und hinten angehoben werden kann. Die seitlichen hinteren Wiegezellen sind außerhalb des Ablagerahmens angebracht. Dazu sind Verlängerungsstäbe, welche auf den Wiegezellen aufliegen, mit dem hinteren Ende des Ablagerahmens verbunden. Die Verlängerungsstäbe sind auch deshalb erforderlich, weil zwischen dem in einer unteren Ebene angeordneten Fahrgestellbügelrahmen und dem Vertikalrahmen zusätzlich schräge Stützstreben vorgesehen sind. Der Teil des Ablagerahmens mit dem beweglichen Ablageelement beginnt somit in Längsrichtung gesehen erst vor den Wiegezellen und vor dem Verbindungspunkt der Stützstreben mit dem Fahrgestellbügelrahmen. Dadurch ist die nutzbare Länge des unteren Ablageelements gegenüber der gesamten zur Verfügung stehenden Fahrgestelllänge des Einkaufswagen deutlich reduziert.

Weiterhin befindet sich die untere Einkaufsartikelaufnahme innen zwischen den beiden seitlichen Holmen des Vertikalrahmens. Sie schließt hinten mit den hinteren Wiegezellen ab, die nach hinten hin offen liegen und ungeschützt sind. Sie sind beim Stapeln von Einkaufswagen exponiert und können daher beschädigt werden.

Außerdem ist der Einkaufswagen im hinteren unteren Bereich nur durch einen Querbügel ausgesteift, der sich quer über den Ablagerahmen erstreckt. Wird der Fahrgestellbügelrahmen hinten gespreizt, beispielweise durch Einschieben eines zweiten Einkaufswagens von schräg hinten, so werden die dabei entstehenden Kräfte über den Querbügel aufgenommen. Der Nachteil besteht aber darin, dass das Aufspreizen des Fahrgestellbügelrahmens zu Schubspannungen in der Verbindungsebene zwischen dem Fahrgestellbügelrahmen und den Wiegezellen und/oder zwischen den Wiegezellen und dem Ablagerahmen führt, welche das Messergebnis verfälschen können und/oder die Wiegezellen beschädigen können.

Ein weiterer Einkaufswagen mit Wiegefunktion ist aus der CN 206 336 317U bekannt. Dabei erstreckt sich der Fahrgestellbügelrahmen von den Streben des Vertikalrahmens ausgehend nach vorn. Dadurch ist die Gesamtbreite geringer als bei dem vorstehend beschriebenen Einkaufswagen. Allerdings sind die Wiegezellen gegen seitliches Anstoßen nicht geschützt, wenn mehrere Einkaufswagen ineinander geschoben werden. Zudem ist keine untere Einkaufsartikelaufnahme vorhanden.

Die Aufgabe der Erfindung besteht somit darin, einen Einkaufswagen der eingangs genannten Art so zu verbessern, dass die nutzbare Länge des Ablageelements in Relation zur Länge des Fahrgestells erhöht wird und dass der Schutz der Wiegezellen insbesondere beim Stapeln verbessert wird.

Diese Aufgabe wird durch einen stapelbaren Einkaufswagen mit den Merkmalen des Anspruchs 1 gelöst.

Ein erster Vorteil ergibt sich aus der Gestaltung des Fahrgestells. Dadurch, dass sich der Fahrgestellbügelrahmen von der Vorderseite des Vertikalrahmens aus nach vorn erstreckt und nicht dazwischen liegt, liegen die beiden seitlichen Schenkel des Fahrgestellbügelrahmens geschützt hinter den Stützabschnitten, von denen aus sich die seitlichen Holme des Vertikalrahmens nach oben erstrecken. Dadurch können die Wiegezellen auf dem Fahrgestellbügelrahmen stehen und sind dabei durch den dahinter angeordneten Vertikalrahmen gegen Stöße von hinten abgeschirmt.

Der Vertikalrahmen ist dazu am unteren Ende durch einen in der Profilbreite vergrößerten Stützprofilabschnitt verstärkt, der sich im rechten Winkel an den Fahrgestellbügelrahmen anschließt. Die Stützprofilabschnitte stehen seitlich etwas über den Fahrgestellbügelrahmen hinweg nach außen vor, was bereits als Anstoßschutz für die Wiegezellen beim Stapelvorgang ausreicht.

Direkt in dem Übergangsbereich zwischen horizontalen und vertikalen Teilen des Fahrgestells ist Platz zur Anordnung der Wiegezellen. Der Abstand der Wiegezellen zum Vertikalrahmen ist so klein wie möglich gewählt und beträgt vorzugsweise weniger als die halbe Länge des Gehäuses der hinteren Wiegezellen.

Eine erste bevorzugte Ausführungsform eines stapelbaren Einkaufswagens sieht vor, dass der Ablagerahmen komplett oberhalb der Oberkante der Wiegezellen positioniert ist. Die untere Einkaufsartikelaufnahme liegt so nämlich vollständig oberhalb der Wiegezellen, so dass beim Ineinanderschieben mehrerer Einkaufswagen der Bugbereich des Ablagerahmens eines hinteren Einkaufswagen nicht seitlich gegen eine Wiegezelle eines davorstehenden Einkaufswagens prallen kann.

Vorteilhaft ist, wenn sich der Ablagerahmen der unteren Einkaufsartikelaufnahme in einer durchgehenden Ebene bis zu einem Ort, der über den hinteren seitlichen Wiegezellen liegt, erstreckt, und wenn ein Lagerbügel, an dem das hintere Ende des beweglichen Ablageelements eingehängt ist, oberhalb der Wiegezellen positioniert ist. Dadurch kann die Länge des Fahrgestells noch besser für das schwenkbare Ablageelement ausgenutzt werden.

Eine alternative Ausführungsform eines stapelbaren Einkaufswagens sieht vor, dass im vorderen Bereich des Fahrgestells, vorzugsweise an dessen Unterseite, ein Elektronikgehäuse angeordnet ist. Das Elektronikgehäuse wird vorzugsweise, im Grundriss gesehen, zwischen den vorderen Rädern und einer als Stapelanschlag eingefügten Querstrebe platziert. Dieser Bereich wird für das Ineinanderschieben mehrerer Einkaufswagen nicht benötigt. **In** dem Elektronikgehäuse kann u.a. die für die Ansteuerung und Auswertung der Wiegezellen benötigte Elektronik, wie auch eine Batterie zur Stromversorgung untergebracht werden.

Bei der bevorzugten Ausführungsform des Einkaufswagens ist außerdem vorgesehen, dass sich die vordere Wiegezelle innerhalb des Elektronikgehäuses befindet, so dass diese gleichzeitig gegen äußere Einflüsse geschützt ist. An der Oberseite des Elektronikgehäuses ist wenigstens eine Aussparung vorgesehen, damit die zu wiegende Einheit auf die Wiegezelle aufsetzbar ist.

Üblicherweise ist an einem herkömmlichen Einkaufswagen, der keine Wiegefunktion besitzt, die untere Einkaufsartikelaufnahme mit einem festen, äußeren Ablagerahmen und einem darin gelagerten, nach oben verschwenkbaren Ablageelement vorgesehen, wobei der feste Ablagerahmen meist durch zwei übereinander verlaufende, äußere Drahtelemente gebildet ist und die Ablagefläche durch weitere Drahtelemente, die sich dazwischen erstrecken. Das obere Drahtelement steigt im rückwärtigen Bereich an, damit die Schwenkachse für die bewegliche Ablagefläche höher liegend angeordnet ist und Teile eines zweiten Einkaufswagens beim Stapeln darunterher eingeschoben werden können.

Bei einer bevorzugten Ausführungsform des erfindungsgemäßen Einkaufswagens ist vorgesehen, dass der äußere Ablagerahmen in Längsrichtung gesehen von einer tiefen Ebene, die unmittelbar über dem Fahrgestellbügelrahmen liegt, durch eine vor den hinteren Wiegenzellen ausgebildete Kröpfung bis in eine obere Ebene verläuft, die sich oberhalb der hinteren seitlichen Wiegezellen befindet.

Wenn der Ablagerahmen durch Drahtelemente gebildet ist, ist die Kröpfung dadurch gebildet, dass das untere Drahtelement, über welches die Einkaufsartikelaufnahmeeinheit auf den Wiegezellen gelagert ist, ebenso wie das obere Drahtelement im rückwärtigen Bereich nach oben verspringt. Damit ist nur die Auflage- und Verbindungsstelle zwischen der Einkaufsartikelaufnahmeeinheit und die Wiegezellen nach oben verlagert, während die Unterkante der zu wiegenden Einkaufsartikelaufnahmeeinheit nach unten verlagert ist. Dadurch ist der Abstand zwischen dem Fahrgestell und dem unterem Drahtrahmen der zu wiegenden Einheit verringert, wodurch wiederum die Griffhöhe verringert ist, und folglich auch die Gesamthöhe des Einkaufswagens mit der Wiegeeinheit reduzierbar ist. Die geringere Griffhöhe ist für kleinere Personen ergonomisch günstiger. Eine reduzierte Gesamthöhe reduziert auch das Kippmoment des beladenen Einkaufswagens, wenn dieser beispielsweise auf geneigten Außenparkplätzen benutzt wird.

Der Vertikalrahmen besitzt vorzugsweise wenigstens eine Querstrebe, die auf einer Höhe zwischen der Oberkante der unteren Einkaufsartikelaufnahme und der Unterkante des Korbs der oberen Einkaufsartikelaufnahme positioniert ist. Spreizkräfte auf den Fahrgestellbügelrahmen werden damit kompensiert und wirken nicht auf die Verbindungsebenen zwischen der Wiegezellen mit dem Fahrgestellbügelrahmen und dem Ablagerahmen.

Vorteilhaft ist, wenn am Vertikalrahmen auch eine obere Querstrebe vorgesehen ist, die auf einer Höhe unterhalb des Griffes und oberhalb der Schwenkachse der Rückwandklappe angeordnet ist und die die beiden seitlichen Holme direkt miteinander verbindet, indem sie z. B. daran angeschweißt ist. Gegenüber einer herkömmlichen Befestigung einer Querstrebe, die über Befestigungselemente aus Kunststoff erfolgt, ergibt sich eine höhere Stabilität.

Die Querstrebe kann insbesondere als hohles Querrohr ausgebildet sein. Dabei ist es weiterhin vorteilhaft, wenn die Anzeigeeinheit direkt an dem Querstrebe befestigt ist und wenigstens einer der seitlichen Holme eine vom Querschnitt der Querstrebe überdeckte Ausnehmung besitzt, so dass die Querstrebe als Kabelkanal nutzbar ist, welcher zur Anzeigeeinheit führt.

Um die Kabelführung zu erleichtern, können am gesamten Fahrgestell Montageöffnungen vorgesehen sein, die durch Stopfen wieder verschließbar sind. Die Montageöffnungen ermöglichen es, die Kabel leichter durch den Rohrrahmen ziehen zu können, welche notwendig sind, um das Elektronikgehäuse, die Wiegezellen und die Anzeigeeinheit miteinander zu verbinden. Damit können außen geführte, ungeschützte Kabel vermieden werden.

Der Ablagerahmen liegt bevorzugt innerhalb der Grundrisskontur des Fahrgestellbügelrahmens und ist im hinteren Bereich über seitlich angebrachte Konsolen auf die Wiegezellen aufgesetzt, welche auf dem Fahrgestellbügelrahmen stehen. Bei dieser Ausführungsform liegt der Ablagerahmen also nicht nur oberhalb der Wiegezellen, sondern - bis auf die seitlichen Konsolen - auch in dem freien Raum zwischen den beiden hinteren Wiegezellen. Durch die Tatsache, dass die Begrenzung des Fahrgestells die Begrenzung des unteren Bereichs des Einkaufswagens bildet, in dem die untere Einkaufsartikelaufnahme aufgenommen ist, wird noch besser vermieden, dass die Wiegezellen beim Stapeln beschädigt werden und/oder der Wiegevorgang bei der Benutzung des Einkaufswagens verfälscht wird.

Vorzugsweise besitzt der Vertikalrahmen außerdem an beiden unteren Enden jeweils einen Stützprofilabschnitt, der sich im rechten Winkel an den Fahrgestellbügelrahmen anschließt und der z. B. rohrförmig sein kann und der in Breitenrichtung des Einkaufswagen eine größere Profilbreite hat als der Fahrgestellbügelrahmen. Damit wird der Knotenpunkt zwischen dem Fahrgestellbügelrahmen und dem Vertikalrahmen ausreichend ausgesteift, so dass dort keine zusätzlichen schrägen Stützstreben erforderlich sind. Die größere Profilbreite schützt zudem die in Fahrtrichtung vor dem Stützprofilabschnitt angeordneten Wiegezellen vor einem Anstoß von hinten.

Der Schutz der hinteren seitlichen Wiegezellen kann zusätzlich noch durch Schutzbügel erhöht werden, die sich vom Ablagerahmen aus nach außen und nach unten bis seitlich vor die Wiegezellen erstrecken, ggf. sogar bis vor den Fahrgestellbügelrahmen. Diese Schutzbügel sind bevorzugt ein integraler Teil des unteren Ablagerahmens.

Bei der alternativen bevorzugten Ausführungsform des Einkaufswagens ist vorgesehen, dass Abschnitte von U-Profilen als Schutzelemente für die hinteren Wiegeeinheiten verwendet werden. Diese werden mit ihrer offenen Seite über die Wiegezellen gestülpt und liegen auf deren für die Wiegung vorgesehenen Auflagefläche auf. Die Einkaufsartikelaufnahmeeinheit wiederum ist auf die U-förmigen Schutzelemente aufgesetzt. Durch die U-Profilform werden die Wiegezellen an beiden Seitenflächen vor mechanischer Beschädigung geschützt. Zudem ergibt sich ein besserer Schutz vor direkter Wassereinwirkung.

Die Erfindung wird nachfolgend mit Bezug auf die in den Zeichnungen dargestellten Ausführungsbeispiele näher erläutert. Die Figuren zeigen im Einzelnen:
- Fig. 1: einen stapelbaren Einkaufswagen nach einer ersten Ausführungsform in perspektivischer Ansicht von schräg vorne;
- Fig. 2: den Einkaufswagen von der linken Seite;
- Fig. 3: einen unteren Teilbereich des Einkaufswagens von vorn;
- Fig. 4: einen unteren Teilbereich des Einkaufswagens von hinten;
- Fig. 5: einen stapelbaren Einkaufswagen nach einer zweiten Ausführungsform in perspektivischer Ansicht von schräg vorne;
- Fig. 6: einen hinteren rechten Bereich des Einkaufswagens nach Fig. 5 in einer perspektivischen Ansicht von schräg hinten;
- Fig. 7: einen vorderen rechten Bereich des Einkaufswagens nach Fig. 5 in einer perspektivischen Ansicht von schräg vorn;
- Fig. 8: einen vorderen rechten Bereich des Einkaufswagens nach Fig. 5 in einer perspektivischen Ansicht von schräg hinten.
- Fig. 9: einen stapelbaren Einkaufswagen nach einer dritten Ausführungsform in perspektivischer Ansicht von schräg vorne;
- Fig. 10: den Einkaufswagen nach Fig. 9 von der linken Seite;
- Fig. 11: einen unteren Teilbereich des Einkaufswagens nach Fig. 9 von vorn;
- Fig. 12: einen unteren Teilbereich des Einkaufswagens nach Fig. 9 von hinten;
- Fig. 13: einen unteren Teilbereich des Einkaufswagens nach Fig. 9 in perspektivischer Ansicht von unten;
- Fig. 14: einen Ausschnitt einer perspektivischen Ansicht auf den Einkaufswagen nach Fig. 9 von hinten rechts und
- Fig. 15: zwei ineinander gestapelte Einkaufswagen gemäß der dritten Ausführungsform.

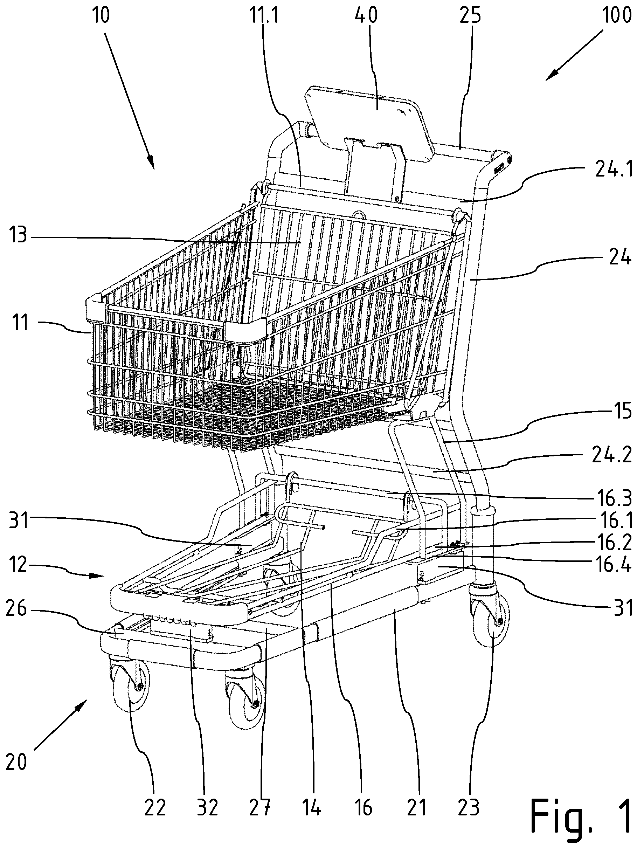

In Figur 1 ist ein stapelbarer Einkaufswagen 100 perspektivisch von schräg vorne dargestellt. Dieser umfasst ein Fahrgestell 20 mit einem unteren, V-förmigen Fahrgestellbügelrahmen 21, einem vorderen Paar von Rollen 22 und einem hinteren Paar von Rollen 23. Das Fahrgestell 20 umfasst außerdem einen Vertikalrahmen 24, der durch seitliche Holme 24.3, 24.4 gebildet ist, die sich von unten nach oben erstrecken und die durch Querstreben 24.1, 24.2 und eine Griffstange 25 miteinander verbunden sind.

Außerdem ist eine Einkaufsartikelaufnahmeeinheit 10, welche - wie bei Einkaufswagen üblich - eine korbartige obere Einkaufsartikelaufnahme 11 und eine davon getrennte, untere Einkaufsartikelaufnahme 12 in Form eines Bodenrosts aufweist, die z. B. für Getränkekisten geeignet ist. Die obere Einkaufsartikelaufnahme 11 und die untere Einkaufsartikelaufnahme 12 sind an beiden Seiten über Streben 15 miteinander verbunden und dadurch in einem festen Abstand übereinander angeordnet. Eine Anzeigeeinheit 40 kann vorgesehen sein, um die in die Einkaufsartikelaufnahmeeinheit 10 eingelegten und die durch Gewichtsmessung und/oder eine Scannereinheit erfassten Waren anzuzeigen.

Damit mehrere Einkaufswagen 100 stapelbar sind, also ineinandergeschoben werden können, um platzsparend geparkt zu werden, ist eine an sich bekannte, nach vorne verjüngende Keilform des Fahrgestellbügelrahmens 21 und der Einkaufsartikelaufnahmeeinheit 10 vorgesehen. Außerdem besitzt die korbartige obere Einkaufsartikelaufnahme 11 eine schwenkbare Rückwandklappe 11.2, die an einem Querbügel 11.1, der einen oberen Korbrand bildet, aufgehängt ist. An der unteren Einkaufsartikelaufnahme 12 ist ein fester Ablagerahmen 16 und ein darin gelagertes, nach oben verschwenkbares Ablageelement 14 vorgesehen. Dieses besitzt im vorderen Bereich eine Schwenkachse und kann im hinteren Bereich angehoben werden. Das schwenkbewegliche Ablageelement 14 ist hinten mit Haken versehen, mit denen es auf einem Lagerbügel 16.3 des Ablagerahmens 16 aufgehängt ist.

Anders als bei herkömmlichen Einkaufswagen sind die Einkaufsartikelaufnahmeeinheit 10 und das Fahrgestell 20 bei dem Einkaufswagen nach der Erfindung weitgehend voneinander entkoppelt. Es gibt beispielweise keine direkte Verbindung des Vertikalrahmens 24 und der Einkaufsartikelaufnahmeeinheit 10. Die gesamte Einkaufswageneinheit 10 ist auf drei Wiegezellen 31, 32 aufgesetzt, die ihrerseits auf dem Fahrgestell 20 aufstehen. Die mechanische Verbindung zwischen der Einkaufsartikelaufnahmeeinheit 10 und dem Fahrgestell 20 erfolgt also allein über die Wiegezellen 31, 32. Je eine Wiegezelle 31 ist auf den beiden hinteren, zum Vertikalrahmen 24 direkt benachbarten Abschnitten des Fahrgestellbügelrahmens 21 angeordnet und wenigstens eine weitere Wiegezelle 32 ist auf einem vorderen Abschnitt des Fahrgestells 20 angeordnet; bei dem dargestellten Ausführungsbeispiel ist die vordere Wiegezelle 32 auf einer Querstrebe 26 hinter dem Frontbereich des Fahrgestellbügelrahmens 21 positioniert. Die Wiegezellen 31, 32 sind jeweils quaderförmig und weisen eine obere horizontale Fläche auf.

Eine Querstrebe 27 dient als Festanschlag beim Stapeln der Einkaufswagen, das heißt, ein Frontbereich des Fahrgestellbügelrahmens 21 eines hinteren Einkaufswagens 100 stößt gegen die Querstrebe 27 des davorstehenden Einkaufswagens 100, so dass der Weg beim Stapeln begrenzt wird und verhindert wird, dass sich die Einkaufswagen 100 ineinander verkeilen.

Eine Querstrebe 24.2 im Vertikalrahmen 24 nimmt Kräfte auf, die beim Spreizen der beiden vertikalen Profilabschnitte des Vertikalrahmens 24 auftreten.

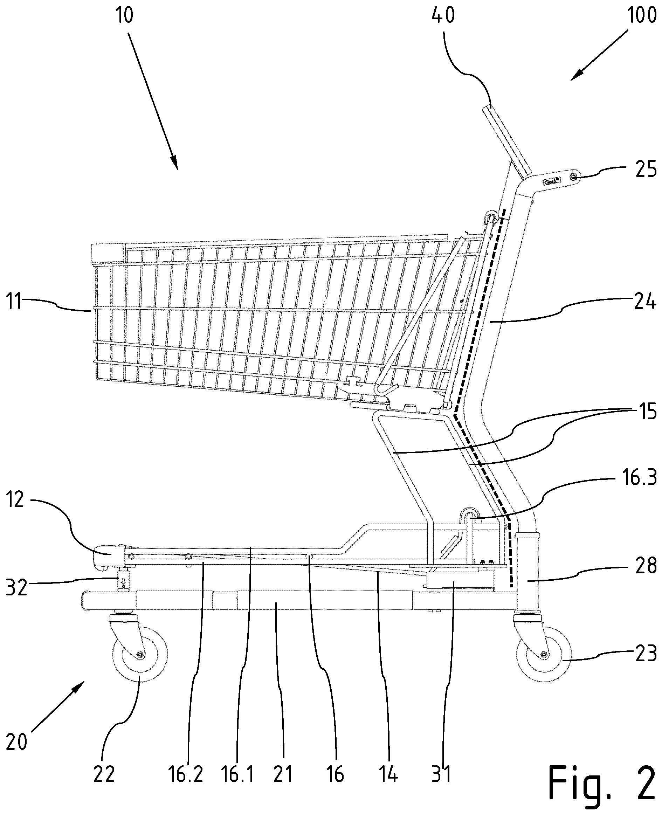

Figur 2 zeigt den Einkaufswagen 100 von der linken Seite gesehen. Die gestrichelte Linie kennzeichnet die Trennung zwischen dem Vertikalrahmen 24 als Teil des Fahrgestells 20 und der davon getrennten Einkaufsartikelaufnahmeeinheit 10. Die Vorderkante der unteren Einkaufsartikelaufnahme 12 liegt in Längsrichtung des Einkaufswagens 100 gegenüber der Vorderkante des V-förmigen Fahrgestellbügelrahmens 21 etwas zurückversetzt.

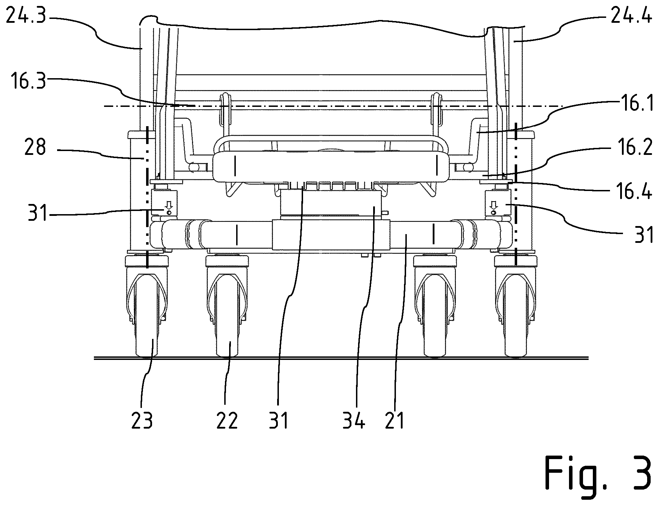

Figur 3 zeigt einen unteren Abschnitt des Einkaufswagens 100 von vorn. Die strichpunktierten Linien kennzeichnen die größtmögliche seitliche Ausdehnung der Außenkontur des Fahrgestellbügelrahmens 21. **In** einem Grundriss, also von oben gesehen, liegen die seitlichen hinteren Wiegezellen 31 somit innerhalb dieser Außenkontur.

Das Ablageelement 14 ist schwenkbeweglich an einem Ablagerahmen 16 befestigt. Der Ablagerahmen 16 befindet sich vollständig oberhalb der hinteren seitlichen Wiegezellen 31, während sich der Fahrgestellbügelrahmen 21 vollständig darunter befindet. Es gibt somit keine Teile, die beim Stapeln von mehreren Einkaufswagen an die seitlichen hinteren Wiegezellen 31 stoßen können.

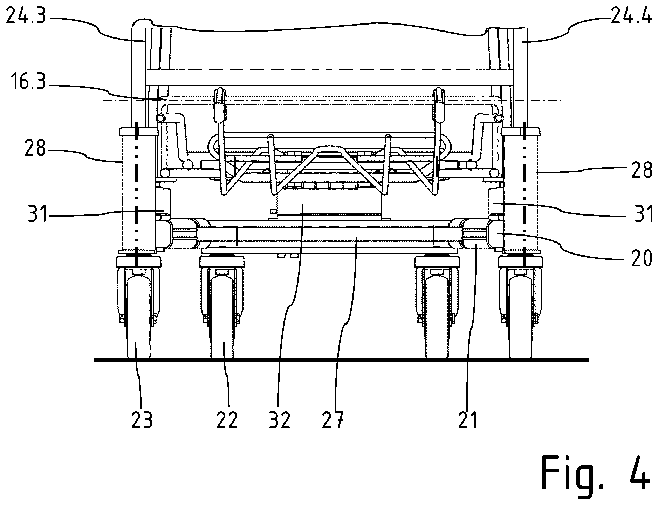

Fig. 4 zeigt einen unteren Abschnitt des Einkaufswagens 100' von hinten. Die seitlichen hinteren Wiegezellen 31 sind, wie bei der ersten Ausführungsform des Einkaufswagens 100 auch, nach hinten durch die breiteren Stützprofilabschnitte 28 des Vertikalrahmens 24 abgeschirmt. Die Wiegezellen 31 ragen nicht nach innen über den Fahrgestellbügelrahmen 21 hinaus und können beim Stapeln von mehreren Einkaufswagen nicht direkt getroffen werden.

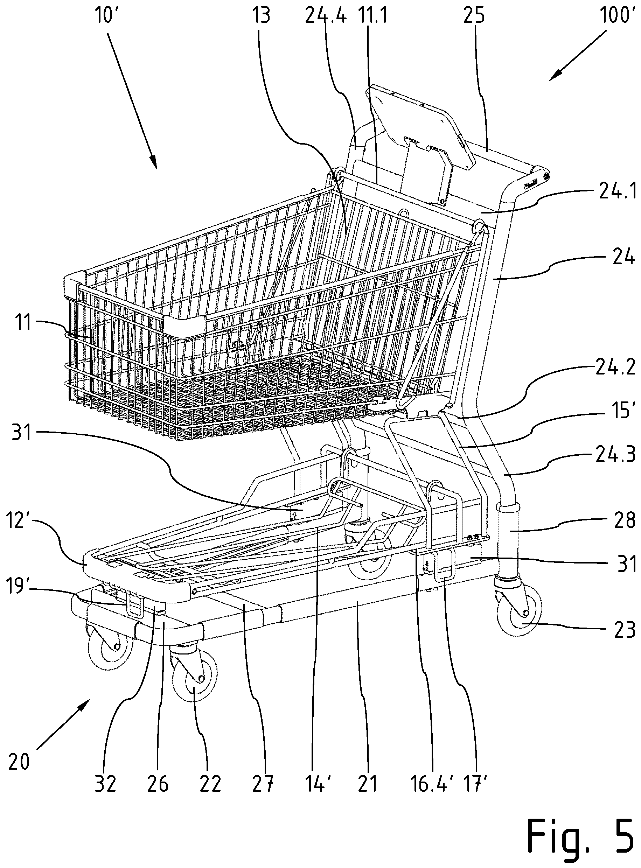

In Figur 5 ist eine weitere Ausführungsform eines stapelbaren Einkaufswagens 100' dargestellt. Das Fahrgestell 20 ist gegenüber der zuvor beschriebenen Ausführungsform unverändert. Eine Einkaufsartikelaufnahmeeinheit 10' ist ebenfalls nahezu identisch. Unterschiedlich daran ist nur, dass Schutzbügel 17', 19' vorgesehen sind, die an eine untere Einkaufsartikelaufnahmeeinheit 12' angesetzt sind und von dort aus nach unten ragen.

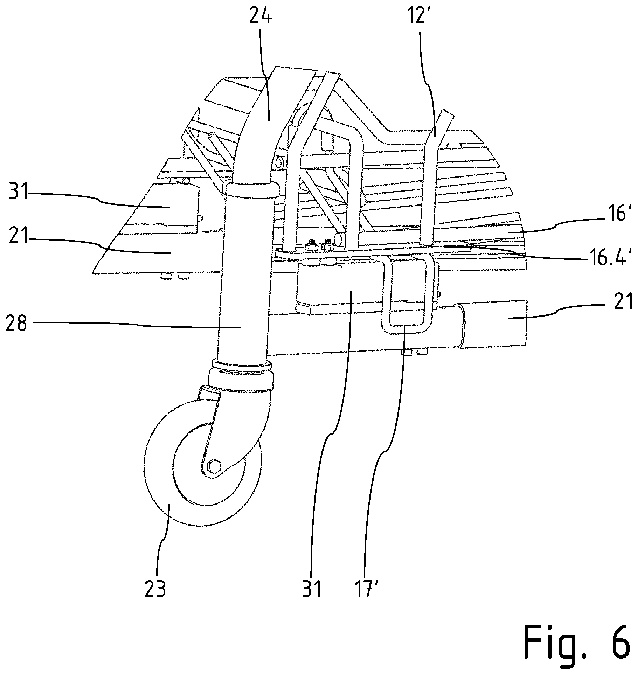

Figur 6 zeigt in einer perspektivischen Ansicht auf den hinteren rechten Bereich des Einkaufswagens 100', dass die Schutzbügel 17' seitlich an den Ablagerahmen 16' der unteren Einkaufsartikelaufnahme 12' angebunden sind und sich über die Seitenfläche der Wiegezelle 31 hinweg hinaus bis auf Höhe des Fahrgestellbügelrahmens 21 erstrecken. Sichtbar ist außerdem die Lage der Konsolen 16.4', mit denen der Ablagerahmen 16' auf der Wiegezelle 31 aufliegt.

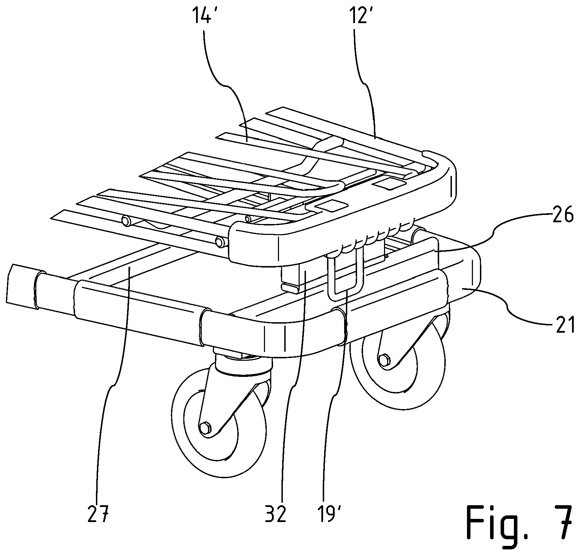

Figur 7 zeigt in einer perspektivischen Ansicht von schräg vorn auf den vorderen rechten Bereich des Einkaufswagens 100', dass sich der vordere Schutzbügel 19' über die Seitenfläche der Wiegezelle 32 hinweg bis vor eine Querstrebe 26 des Fahrgestellbügelrahmens 21 erstreckt.

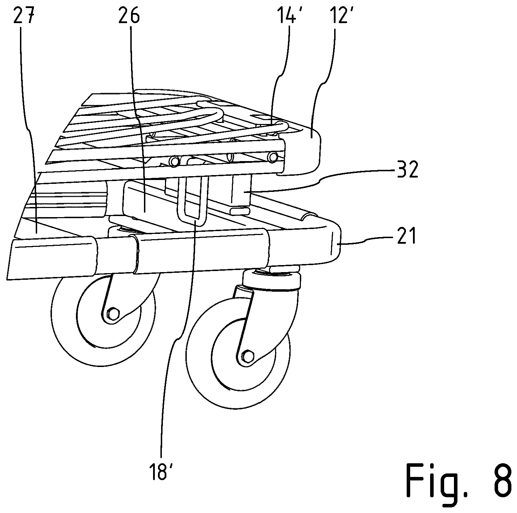

Figur 8 zeigt in einer perspektivischen Ansicht von schräg hinten auf den vorderen rechten Bereich des Einkaufswagens 100', dass ein weiterer Schutzbügel 18' vorgesehen ist, der sich über die Seitenfläche des vorderen Wiegeelements 32 hinweg bis hinter die Querstrebe 26 des Fahrgestellbügelrahmens 21 erstreckt.

Durch die Schutzbügel 18', 19' ist die untere Einkaufsartikelaufnahme 12'in Längsrichtung formschlüssig an der Querstrebe 26 festgelegt, und darüber indirekt die gesamte Einkaufsartikelaufnahmeeinheit 10. Durch die seitlichen Schutzbügel 17' ist die Einkaufsartikelaufnahmeeinheit 10 außerdem in Querrichtung formschlüssig am Fahrgestell 20 festgelegt. Damit werden Schubkräfte auf die Verbindungen der Wiegezellen 31, 32 zum Fahrgestellbügelrahmen 21 und zu der Einkaufsartikelaufnahme 12' vermieden.

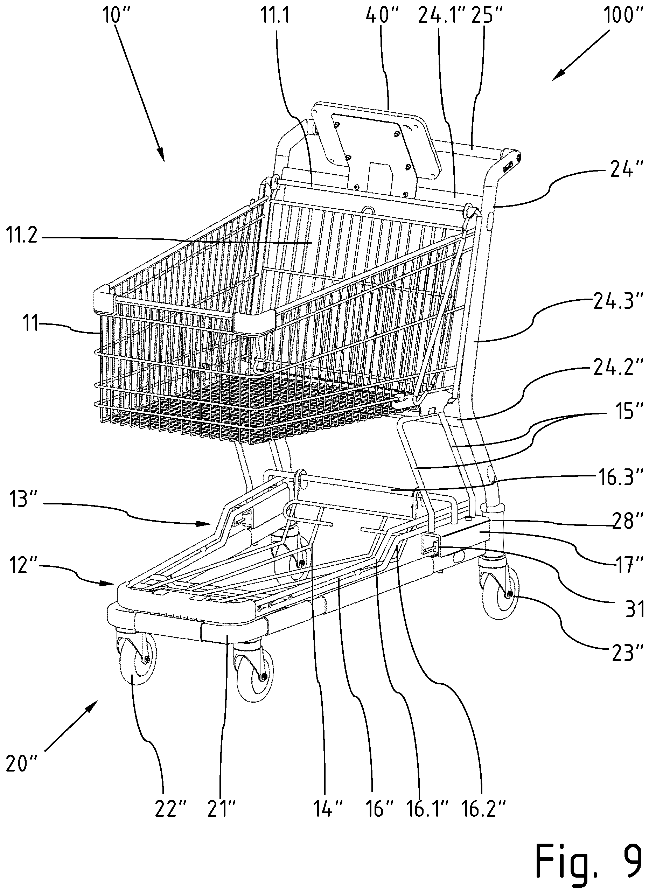

**In** Figur 9 ist eine dritte Ausführungsform eines stapelbaren Einkaufswagens 100' perspektivisch von schräg vorne dargestellt. Dieser umfasst ein Fahrgestell 20" mit einem unteren, V-förmigen Fahrgestellbügelrahmen 21", einem vorderen Paar von Rollen 22" und einem hinteren Paar von Rollen 23".

Das Fahrgestell 20" umfasst einen Vertikalrahmen 24" mit einer Griffstange 25". Eine Einkaufsartikelaufnahmeeinheit 10" besitzt die gleiche korbartige obere Einkaufsartikelaufnahme 11 wie die zuvor beschriebenen Ausführungsformen und eine davon getrennte, untere Einkaufsartikelaufnahme 12", die z. B. für Getränkekisten geeignet ist. Die korbartige obere Einkaufsartikelaufnahme 11 besitzt eine verschwenkbare Rückwandklappe 11.2, die an einem Querbügel 11.1 aufgehängt ist. Der Querbügel 11.1 bildet zugleich einen oberen Korbrand. Die obere Einkaufsartikelaufnahme 11 und die untere Einkaufsartikelaufnahme 12" sind an beiden Seiten über je zwei parallele Streben 15" miteinander verbunden und dadurch in einem festen vertikalen Abstand übereinander angeordnet.

An der unteren Einkaufsartikelaufnahme 12" sind ein fester, äußerer Ablagerahmen 16" und ein darin gelagertes, nach oben verschwenkbares Ablageelement 14" vorgesehen. Diese besitzt im vorderen Bereich eine Schwenkachse und kann im hinteren Bereich angehoben werden. Das schwenkbewegliche Ablageelement 14" ist hinten mit Haken versehen, mit denen es auf einem Lagerbügel 16.3" des Ablagerahmens 16" aufgehängt ist. Der äußere Ablagerahmen 16" ist durch zwei parallel geführte, miteinander an mehreren Stellen verbundene Drahtelemente 16.1", 16.2" gebildet. Diese laufen in Längsrichtung gesehen vor den hinteren Wiegenzellen bis in eine obere Ebene, die sich vollständig oberhalb der Wiegenzellen befindet. Durch die Kröpfung 13" der Drahtelemente 16.1", 16.2" kann der in Längsrichtung gesehen vordere Bereich des Ablagerahmens 16" und des Ablageelements 14" sehr tief angeordnet werden, nämlich in einer Ebene unmittelbar oberhalb des Fahrgestellbügelrahmens 21".

Damit mehrere Einkaufswagen 100" stapelbar sind, also ineinandergeschoben werden können, um platzsparend geparkt zu werden, ist eine an sich bekannte, nach vorne verjüngende Keilform des Fahrgestellbügelrahmens 21" und der korbartig ausgebildeten Einkaufsartikelaufnahmeeinheit 10" vorgesehen.

Der Vertikalrahmen 24" ist durch seitliche Holme 24.3", 24.4" gebildet, die sich von dem Fahrgestellbügelrahmen, der die untere Ebene bildet, nach oben erstrecken, und durch Querstreben 24.1", 24.2", welche die seitlichen Holme 24.3", 24.4" miteinander verbinden. Eine Anzeigeeinheit 40" ist an der oberen Querstrebe 24.1" befestigt.

Eine direkte Verbindung des Vertikalrahmens 24" und der Einkaufsartikelaufnahmeeinheit 10" besteht nicht. Die gesamte Einkaufswageneinheit 10" ist auf drei Wiegezellen 31, 32 aufgesetzt, die ihrerseits auf dem Fahrgestell 20" aufstehen. Die mechanische Verbindung zwischen der Einkaufsartikelaufnahmeeinheit 10" und dem Fahrgestell 20" erfolgt also allein über die Wiegezellen 31, 32. Je eine Wiegezelle 31 ist auf den beiden hinteren, zum Vertikalrahmen 24" direkt benachbarten Abschnitten des Fahrgestellbügelrahmens 21" angeordnet, und wenigstens eine weitere Wiegezelle ist auf einem vorderen Abschnitt des Fahrgestells 20" angeordnet.

Die Wiegezellen 31, 32 sind jeweils quaderförmig und weisen eine obere horizontale Fläche auf. Sie sind innen- und außenseitig von einem Schutzelement 17" überdeckt, das durch einen Abschnitt eines U-Profils gebildet ist. Die Streben 15" der Einkaufsartikelaufnahmeeinheit 10" sind direkt mit der Oberseite des mittleren Schenkels des Schutzelements 17" verschweißt. Die nach unten weisende Fläche des mittleren Schenkels des Schutzelements 17liegt auf der darunter befindlichen Wiegezelle 31 auf.

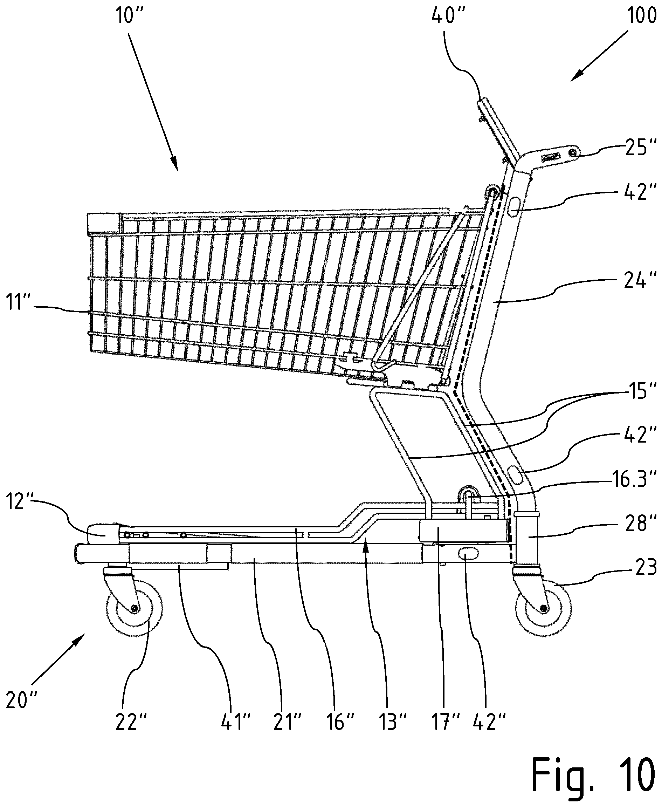

Figur 10 zeigt den Einkaufswagen 100" von der linken Seite gesehen. Die gestrichelte Linie kennzeichnet die Trennung zwischen dem Vertikalrahmen 24" als Teil des Fahrgestells 20" und der davon getrennten Einkaufsartikelaufnahmeeinheit 10". Die Vorderkante der unteren Einkaufsartikelaufnahme 12" liegt in Längsrichtung des Einkaufswagens 100" gegenüber der Vorderkante des V-förmigen Fahrgestellbügelrahmens 21" etwas zurückversetzt.

Deutlich werden hier die vertikale Positionierung des Fahrgestellbügelrahmens 21" und des äußeren Ablagerahmens 16". Um das Einziehen von Kabeln zu erleichtern, sind an den seitlichen Oberflächen des Fahrgestellbügelrahmens 21" und des Vertikalrahmens 24" mehrere langlochförmige Montageöffnungen vorgesehen, die nachträglich durch Montageöffnungsabdeckungen 42" verschlossen worden sind.

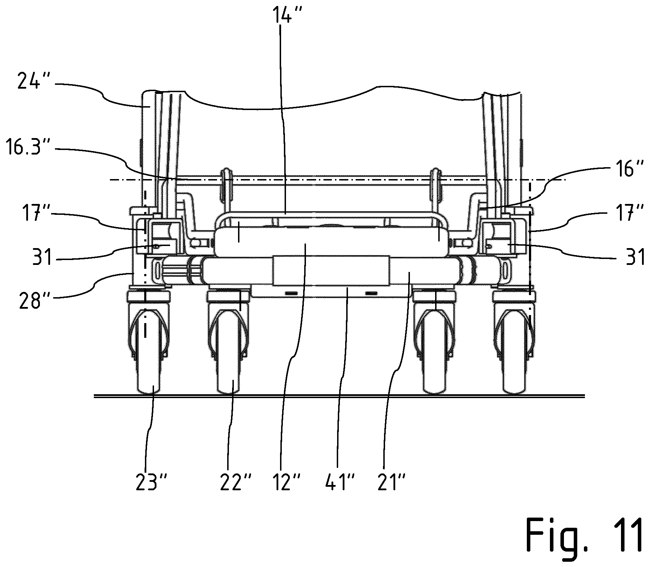

Figur 11 zeigt einen unteren Abschnitt des Einkaufswagens 100" von vorn. Die strichpunktierten Linien kennzeichnen die größtmögliche seitliche Ausdehnung der Außenkontur des Fahrgestellbügelrahmens 21". In einem Grundriss von oben gesehen, liegen die seitlichen hinteren Wiegezellen 31 somit vollständig innerhalb dieser Außenkontur.

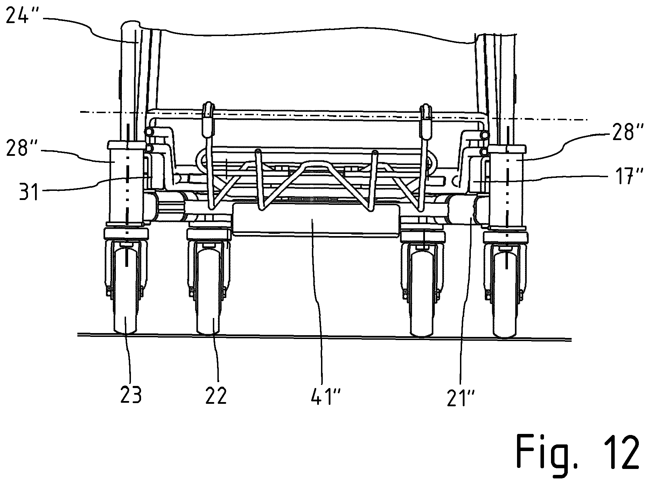

Fig. 12 zeigt einen unteren Abschnitt des Einkaufswagens 100" von hinten. Die seitlichen hinteren Wiegezellen 31 sind, wie bei den anderen Ausführungsform des nach der Erfindung ausgebildeten Einkaufswagens auch, nach hinten durch die breiteren Stützprofilabschnitte 28" des Vertikalrahmens 24" abgeschirmt. Die Wiegezellen 31 ragen also nicht seitlich nach innen über den Fahrgestellbügelrahmen 21" hinaus und können beim Stapeln von mehreren Einkaufswagen 100" deshalb nicht direkt getroffen werden.

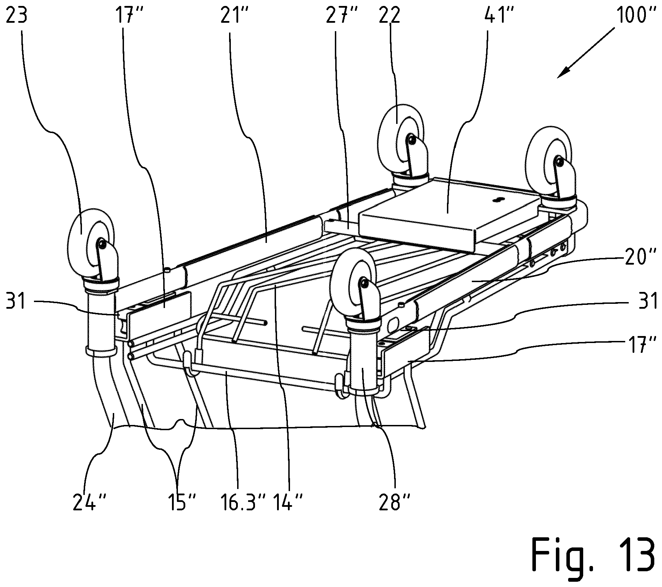

In Fig. 13 ist eine perspektivische Ansicht auf die Unterseite eines kopfüber gedrehten Einkaufswagens 100" abgebildet. Gut sichtbar ist hier die Positionierung der Wiegezellen 31 innerhalb der Schutzelemente 17". Im vorderen Bereich des Fahrgestellbügelrahmens 21" ist von unten ein Elektronikgehäuse 41" angesetzt, dessen hintere Seite am Stapelanschlag 27" abgestützt ist.

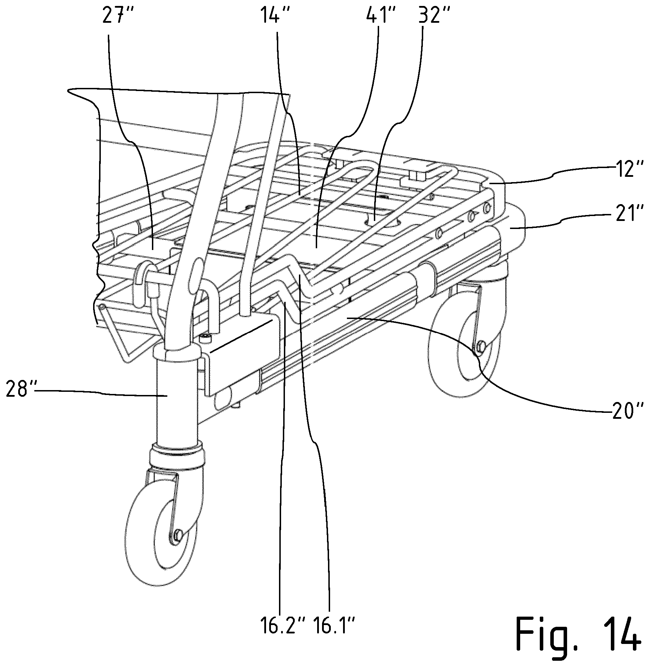

Fig. 14 zeigt einen Ausschnitt einer perspektivischen Ansicht auf den Einkaufswagen von hinten rechts. In einer Oberseite des Elektronikgehäuses 41" ist eine Aussparung vorgesehen, durch die ein Teil der Wiegezelle 32 nach außen ragt, auf welchem der vordere Bereich des Ablagerahmens 16" abgestützt ist. Durch die vertiefte Anordnung der vorderen Wiegezelle 32 im Elektronikgehäuse 41" und durch die Kröpfung der Drahtelemente 16.1", 16.2" im Ablagerahmen 16" kann die untere Einkaufsartikelaufnahme 12" sehr nah am Fahrgestellbügelrahmen 21" positioniert werden. Der Abstand ist gerade so groß gewählt, dass die untere Einkaufsartikelaufnahme 12" auch bei maximaler Gewichtsbelastung der Einkaufsartikelaufnahmeeinheit 10" und einem entsprechenden Federweg an der Wiegezelle 32' nicht an den Fahrgestellbügelrahmen 21" anstößt.

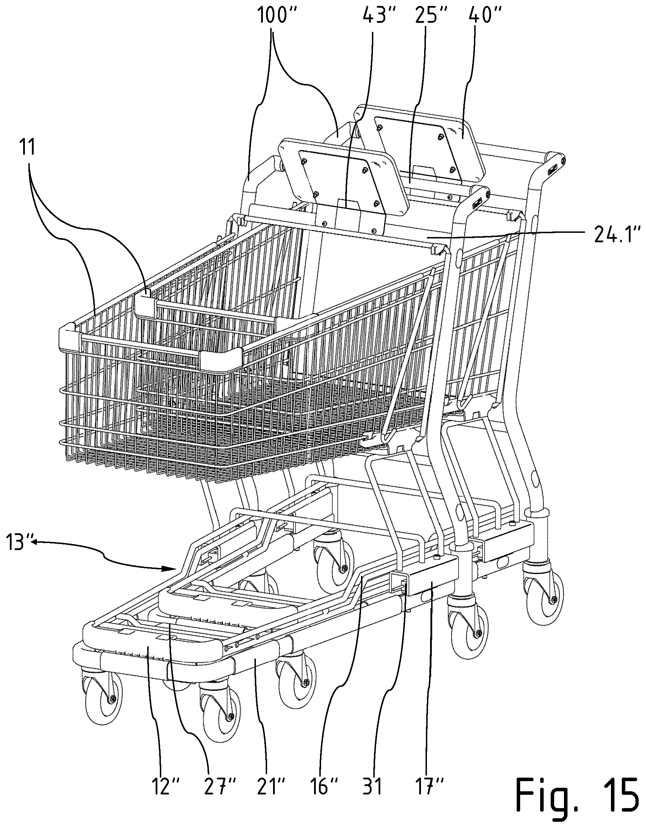

In Fig. 15 sind zwei gestapelte Einkaufswagen 100" von schräg vorn abgebildet. Die Körbe der oberen Einkaufsartikelaufnahmen 11 greifen in bekannter Weise ineinander, wobei die hier nicht dargestellte Rückwandklappe des vorderen Einkaufswagens 100" nach oben schwenkt. Ebenfalls nicht dargestellt ist an beiden Einkaufswagen 100" jeweils die untere Ablagefläche an der unteren Einkaufsartikelaufnahme 12".

Damit die Bildung eines Stapels mehrerer Einkaufswagen 100" nach der Erfindung möglich ist, sind zwei Besonderheiten vorgesehen:
Die Anzeigeeinheiten 40" sind an gewinkelten Halteblechen 43" mit der oberen Querstrebe 24.1" verbunden. Dabei ist ein Knick in dem gewinkelten Halteblech 43" vorgesehen und das Halteblech 43" ist so positioniert, dass die Griffstange 25" eines vorderen Einkaufswagens 100" in dem aufgrund des Knicks freien Bereich an der Rückseite der Anzeigeeinheit 40 des hinteren Einkaufswagens 100" positionierbar ist.

Weiterhin ist diejenige Längsrichtungsposition am Fahrgestellbügelrahmen 21", an der die Drahtelemente des äußeren Ablagerahmens 16" gekröpft sind und hoch bis über die hinteren seitlichen Wiegezellen 31 hochlaufen, so gewählt, dass der vordere, abgesenkte Teil der Einkaufsartikelaufnahme 12" ausreichend lang ist, damit der Fahrgestellbügelrahmen 21" des hinteren Einkaufswagens 100" beim Ineinanderschieben die hinteren seitlichen Wiegezellen 31 des vorderen Einkaufswagens 100" nicht treffen kann. Die Lage ist vielmehr so gewählt, dass die Fahrgestellbügelrahmen 21" beider Einkaufswagen 100" bereits lagerichtig zueinander geführt und ausgerichtet sind, bevor die höher liegenden Abschnitte des Ablagerahmens 16" des hinteren Einkaufswagens 100" überhaupt auf die Schutzelemente 17" an den hinteren seitlichen Wiegezellen 31 des vorderen Einkaufswagens 100" treffen können.

Werden zwei Einkaufswagen 100" ineinandergeschoben, so kann zwar der Bugbereich des Fahrgestellbügelrahmens 21" des hinteren Einkaufswagens 100" zunächst von innen gegen den Fahrgestellbügelrahmen 21" des vorderen Einkaufswagens 100" stoßen. Dabei können die Wiegezellen 31 jedoch nicht getroffen werden, da sie nach hinten durch die Stützabschnitte 28" abgeschirmt sind und oben auf dem Fahrgestellbügelrahmen 21" angebracht sind, so dass eine Berührung überhaupt nur durch zwischen den weiter vorn und tiefer liegenden Teilen des Fahrgestellbügelrahmens 21" und der unteren Einkaufsartikelaufnahme 12" möglich ist. Durch das Ineinanderschieben werden die beiden Fahrgestellbügelrahmen 21" aneinander geführt und zueinander ausgerichtet, bevor die höher liegenden Teile aneinanderstoßen können.

In der Endposition im Stapel befindet sich der Bereich der Kröpfung der Drahtelemente des Ablagerahmens 16" am hinteren Einkaufswagen 100" deutlich vor den Schutzelementen 17" auf den hinteren seitlichen Wiegezellen 31 des vorderen Einkaufswagens 100" im Stapel.

### Bezugszeichen:

- 100; 100'; 100": Einkaufswagen

- 10; 10": Einkaufsartikelaufnahmeeinheit
- 11: obere Einkaufsartikelaufnahme
- 11.1: Querbügel
- 11.2: Rückwandklappe
- 12; 12'; 12": untere Einkaufsartikelaufnahme
- 13": Kröpfung
- 14; 14": unteres Ablageelement
- 15; 15": Streben
- 16; 16": Ablagerahmen
- 16.1; 16.2; 16.1", 16.2": Drahtelemente
- 16.4, 16.4": Lagerbügel
- 16.2; 16.2': Konsole
- 17': seitlicher Schutzbügel
- 17": seitliches Schutzelement
- 18': Schutzbügel
- 19': vorderer Schutzbügel

- 20; 20": Fahrgestell
- 21; 21": Fahrgestellbügelrahmen
- 22, 23: Rollen
- 24; 24": Vertikalrahmen
- 24.1; 24.1": oberes Querstrebe
- 24.2; 24.2": unteres Querstrebe
- 24.3; 24.4; 24.3"; 24.4": seitliche Holme
- 25; 25': Griffstange
- 26, 26": Querstrebe
- 27; 27": Querstrebe
- 28; 28": Stützprofilabschnitt

- 31, 32: Wiegezellen

- 40; 40": Anzeigeeinheit
- 41": Elektronikgehäuse
- 42": Montageöffnungsabdeckung
- 43": Halteblech

## Patentansprüche

1. Stapelbarer Einkaufswagen (100; 100'; 100"), wenigstens umfassend:
- ein Fahrgestell (20; 20'; 20") mit einem unteren, V- oder U-förmigen Fahrgestellbügelrahmen (21; 21'; 21") mit Rollen (22, 23) und mit einem Vertikalrahmen (24; 24") mit wenigstens zwei seitlichen Holmen (24.3, 24.4; 24.3", 24.4"),
- einer Einkaufsartikelaufnahmeeinheit (10; 10'; 10"), welche eine obere Einkaufsartikelaufnahme (11) und eine dazu vertikal beabstandet angeordnete, untere Einkaufsartikelaufnahme (12; 12'; 12") aufweist,
wobei der Einkaufswagen (100; 100'; 100") durch eine sich nach vorne verjüngende Keilform des Fahrgestellbügelrahmens (21; 21'; 21") und durch ein zumindest am hinteren Ende anhebbares, bewegliches Ablageelement (14; 14") an der unteren Einkaufsartikelaufnahme (12; 12') stapelbar ausgebildet ist;
- wobei die Einkaufsartikelaufnahmeeinheit (10; 10'; 10") über wenigstens drei Wiegezellen (31, 32) am Fahrgestell (20; 20'; 20") gelagert ist, von denen je eine Wiegezelle (31) auf den beiden hinteren Abschnitten des Fahrgestellbügelrahmens (21; 21'; 21") angeordnet ist und wenigstens eine Wiegezelle (32) in einem vorderen Bereich des Fahrgestellbügelrahmens (21; 21'; 21") angeordnet ist;
- wobei der Fahrgestellbügelrahmen (21; 21'; 21") in Fahrtrichtung vor den seitlichen Holmen (24.3, 24.4; 24.3", 24.4") des Vertikalrahmens (24; 24") angeordnet ist;
- **dadurch gekennzeichnet, dass** der Vertikalrahmen (24; 24") am unteren Ende einen Stützprofilabschnitt (28; 28") besitzt, der sich im rechten Winkel an den Fahrgestellbügelrahmen (21; 21'; 21") anschließt, wobei die hinteren seitlichen Wiegezellen (31) neben und vor dem Stützprofilabschnitt (28: 28") auf dem Fahrgestellbügelrahmen (21; 21'; 21") angeordnet sind und
- dass der Stützprofilabschnitt (28; 28") in Breitenrichtung des Einkaufswagens (100; 100'; 100") gesehen eine größere Profilbreite hat als der sich daran anschließende Profilabschnitt des Fahrgestellbügelrahmens (21; 21'; 21").

2. Einkaufswagen (100; 100'; 100") nach Anspruch 1, **dadurch gekennzeichnet, dass** das Ablageelement (14; 14'; 14") der unteren Einkaufsartikelaufnahme (12; 12'; 12") von einem Ablagerahmen (16; 16'; 16") umfasst ist, der über der jeweiligen Oberkante der Wiegezellen (31, 32) positioniert ist und der sich in Längsrichtung bis oberhalb der hinteren seitlichen Wiegezellen (31) nach hinten erstreckt.

3. Einkaufswagen (100; 100'; 100") nach Anspruch 2, **dadurch gekennzeichnet, dass** das hintere Ende des Ablageelements (14; 14'; 14") an einem Lagerbügel (16.3; 16.3") eingehängt ist, der sich quer über einen hinteren Abschnitt des Ablagerahmens (16; 16'; 16") erstreckt und der über den hinteren seitlichen Wiegezellen (31) positioniert ist.

4. Einkaufswagen (100; 100'; 100") nach Anspruch 2 oder 3, **dadurch gekennzeichnet, dass** der Ablagerahmen (16; 16'; 16") innerhalb der Grundrisskontur des Fahrgestellbügelrahmens (21; 21'; 21") liegt.

5. Einkaufswagen (100; 100'; 100") nach einem der Ansprüche 2 bis 4, **dadurch gekennzeichnet, dass** die obere Einkaufsartikelaufnahme (11) korbartig ausgebildet ist und eine sich nach vorne verjüngende Keilform aufweist und eine verschwenkbare Rückwandklappe (11.2) besitzt.

6. Einkaufswagen (100; 100'; 100") nach einem der Ansprüche 1 bis 5, **dadurch gekennzeichnet, dass** eine vordere Wiegezelle (32) auf einer Querstrebe (26) hinter dem Frontbereich des Fahrgestellbügelrahmens (21) oder in einem Zwischenraum zwischen dem Frontbereich des Fahrgestellbügelrahmens (21") und einer in diesen als Stapelanschlag eingefügten Querstrebe (27") positioniert ist.

7. Einkaufswagen (100; 100') nach einem der Ansprüche 2 bis 6, **dadurch gekennzeichnet, dass** der Ablagerahmen (16; 16') im hinteren Bereich über seitlich angebrachte Konsolen (16.4; 16.4') auf die hinteren Wiegezellen (31) aufgesetzt ist, welche auf dem Fahrgestellbügelrahmen (21; 21') stehen.

8. Einkaufswagen (100") nach wenigstens einem der vorhergehenden Ansprüche, **dadurch gekennzeichnet, dass** im vorderen Bereich des Fahrgestells (20") ein Elektronikgehäuse (41") angeordnet ist, das im Grundriss gesehen zwischen den vorderen Rädern (22) und einer als Stapelanschlag in den Fahrgestellbügelrahmen (21") eingefügten Querstrebe (27") platziert ist.

9. Einkaufswagen (100") nach Anspruch 8, **dadurch gekennzeichnet, dass** sich die vordere Wiegezelle innerhalb des Elektronikgehäuses (41") befindet, wobei an der Oberseite des Elektronikgehäuses (41") wenigstens eine Aussparung vorgesehen ist, durch welche hindurch die Einkaufsartikelaufnahmeeinheit (10") auf die vordere Wiegezelle (32) aufgesetzt ist.

10. Einkaufswagen (100'; 100") nach einem der vorhergehenden Ansprüche, **dadurch gekennzeichnet, dass** die untere Einkaufsartikelaufnahme (12'; 12") an beiden Seiten des Fahrgestells (20'; 20") jeweils wenigstens ein seitliches hinteres Schutzelement (17") aufweist, das sich jeweils zumindest bis vor die Außenseite der hinteren Wiegezellen (31) erstreckt.

11. Einkaufswagen (100") nach Anspruch 10, **dadurch gekennzeichnet,**
- **dass** das hintere Schutzelement (17") aus einem U-förmigen Profilabschnitt gebildet ist oder einen solchen umfasst, der mit seiner offenen Seite von oben über die hinteren seitlichen Wiegezelle (31) gestülpt ist und der auf einer für die Wägung vorgesehenen Auflagefläche der Wiegezelle (31) aufliegt und
- **dass** die Einkaufsartikelaufnahmeeinheit (10") mit den hinteren Schutzelementen (17") verbunden ist.

12. Einkaufswagen (100") nach Anspruch 11, **dadurch gekennzeichnet, dass** die obere Einkaufsartikelaufnahme (11) und die untere Einkaufsartikelaufnahme (12; 12'; 12") über Streben (15") miteinander verbunden sind und dass die Streben (15") direkt mit der Oberseite des mittleren Schenkels des im Profil U-förmigen Schutzelements (17") verbunden sind.

13. Einkaufswagen (100") nach wenigstens einem der vorhergehenden Ansprüche, **dadurch gekennzeichnet, dass** der äußere Ablagerahmen (16") in Längsrichtung gesehen von einer dicht über dem Fahrgestellbügelrahmen (21") befindlichen Ebene aus durch eine Kröpfung (13") vor den hinteren Wiegenzellen (31) ansteigt und bis in eine obere Ebene läuft, welche sich vollständig oberhalb der hinteren seitlichen Wiegezellen (31) befindet.

14. Stapel von mehreren Einkaufswagen (100") nach Anspruch 13, **dadurch gekennzeichnet,**
- **dass** die Längsrichtungsposition der Kröpfung (13") am Fahrgestellbügelrahmen (21") so gewählt ist, dass der vordere, abgesenkte Teil der unteren Einkaufsartikelaufnahme (12") ausreichend lang ist, damit der Fahrgestellbügelrahmen (21") eines hinteren Einkaufswagens (100") beim Ineinanderschieben die hinteren seitlichen Wiegezellen (31) eines vorderen Einkaufswagens (100") nicht treffen kann und
- **dass** sich die Kröpfung (13") am hinteren Einkaufswagen (100") im Stapel vor den Schutzelementen (17") auf den hinteren seitlichen Wiegezellen (31) des vorderen Einkaufswagens (100") befindet.

15. Stapel von mehreren Einkaufswagen (100") nach wenigstens einem der vorhergehenden Ansprüche 1 bis 14 , **dadurch gekennzeichnet, dass** an den Einkaufswagen (100") jeweils eine Anzeigeeinheit (40") ist an einer oberen Querstrebe (24.1") im Vertikalrahmen (24") befestigt ist und dass die Anzeigeeinheiten (40") an einem mit einem Knick gewinkelten Halteblech (43") mit der oberen Querstrebe (24.1") verbunden sind, wobei das gewinkelte Halteblech (43") so positioniert ist, dass eine Griffstange (25") eines vorderen Einkaufswagens (100") in dem aufgrund des Knicks freien Bereich an der Rückseite der Anzeigeeinheit (40") des hinteren Einkaufswagens (100") positionierbar ist.

## Claims

1. Stackable shopping trolley (100; 100'; 100") at least comprising:
- a chassis (20; 20'; 20") with a lower, V-shaped or U-shaped chassis bracket frame (21; 21'; 21") with castors (22, 23) and with a vertical frame (24; 24") with at least two lateral bars (24.3, 24.4; 24.3", 24.4"),
- a shopping-item receiving unit (10; 10'; 10") which has an upper shopping-item receptacle (11) and has a lower shopping-item receptacle (12; 12'; 12") arranged spaced apart vertically therefrom,
wherein the shopping trolley (100; 100'; 100") is designed to be stackable by way of a forwardly tapering wedge shape of the chassis bracket frame (21; 21'; 21") and by way of a movable shelf element (14; 14"), able to be lifted at least at the rear end, at the lower shopping-item receptacle (12; 12');
- wherein the shopping-item receiving unit (10; 10'; 10") is mounted on the chassis (20; 20'; 20") via at least three weighing cells (31, 32), of which in each case one weighing cell (31) is arranged on the two rear portions of the chassis bracket frame (21; 21'; 21") and at least one weighing cell (32) is arranged in a front region of the chassis bracket frame (21; 21'; 21");
- wherein the chassis bracket frame (21; 21'; 21") is arranged in front of the lateral bars (24.3, 24.4; 24.3", 24.4") of the vertical frame (24; 24") in the direction of travel;
- **characterized in that** the vertical frame (24; 24") has at the lower end a supporting-profile portion (28; 28") which adjoins the chassis bracket frame (21; 21'; 21") at a right angle, wherein the rear lateral weighing cells (31) are arranged on the chassis bracket frame (21; 21'; 21") next to and in front of the supporting-profile portion (28; 28"), and
- **in that**, when seen in the width direction of the shopping trolley (100; 100'; 100"), the supporting-profile section (28; 28") has a larger profile width than that profile portion of the chassis bracket frame (21; 21'; 21") which adjoins it.

2. Shopping trolley (100; 100'; 100") according to Claim 1, **characterized in that** the shelf element (14; 14'; 14") of the lower shopping-item receptacle (12; 12'; 12") is surrounded by a shelf frame (16; 16'; 16") which is positioned over the respective top edge of the weighing cells (31, 32) and which, in the longitudinal direction, extends rearwards to above the rear lateral weighing cells (31).

3. Shopping trolley (100; 100'; 100") according to Claim 2, **characterized in that** the rear end of the shelf element (14; 14'; 14") is fitted to a bearing bracket (16.3; 16.3") which extends transversely over a rear portion of the shelf frame (16; 16'; 16") and which is positioned over the rear lateral weighing cells (31).

4. Shopping trolley (100; 100'; 100") according to Claim 2 or 3, **characterized in that** the shelf frame (16; 16'; 16") lies within the plan-view contour of the chassis bracket frame (21; 21'; 21").

5. Shopping trolley (100; 100'; 100") according to one of Claims 2 to 4, **characterized in that** the upper shopping-item receptacle (11) is of basket-like form and has a forwardly tapering wedge shape and a pivotable rear-wall flap (11.2).

6. Shopping trolley (100; 100'; 100") according to one of Claims 1 to 5, **characterized in that** a front weighing cell (32) is positioned on a transverse strut (26) behind the front region of the chassis bracket frame (21) or in an intermediate space between the front region of the chassis bracket frame (21") and a transverse strut (27") inserted into this as a stack stop.

7. Shopping trolley (100; 100') according to one of Claims 2 to 6, **characterized in that**, in the rear region, the shelf frame (16; 16') is placed onto the rear weighing cells (31), which are situated on the chassis bracket frame (21; 21'), via laterally attached mounting brackets (16.4; 16.4').

8. Shopping trolley (100") according to at least one of the preceding claims, **characterized in that**, in the front region of the chassis (20"), there is arranged an electronics housing (41") which, when seen in plan view, is placed between the front wheels (22) and a transverse strut (27") inserted into the chassis bracket frame (21") as a stack stop.

9. Shopping trolley (100") according to Claim 8, **characterized in that** the front weighing cell is situated within the electronics housing (41"), wherein provision is made on the top side of the electronics housing (41") of at least one cutout through which the shopping-item receiving unit (10") is placed onto the front weighing cell (32).

10. Shopping trolley (100'; 100") according to one of the preceding claims, **characterized in that**, on both sides of the chassis (20'; 20"), the lower shopping-item receptacle (12'; 12") has in each case at least one lateral rear protective element (17") which in each case extends at least to in front of the outer side of the rear weighing cells (31).

11. Shopping trolley (100") according to Claim 10, **characterized**
- **in that** the rear protective element (17") is formed from or comprises a U-shaped profile portion which is pushed from above at its open side over the rear lateral weighing cell (31) and which bears on a bearing surface, intended for weighing, of the weighing cell (31), and
- **in that** the shopping-item receiving unit (10") is connected to the rear protective elements (17").

12. Shopping trolley (100") according to Claim 11, **characterized in that** the upper shopping-item receptacle (11) and the lower shopping-item receptacle (12; 12'; 12") are connected to one another via struts (15"), and **in that** the struts (15") are connected directly to the top side of the middle leg of the protective element (17") that is U-shaped in profile.

13. Shopping trolley (100") according to at least one of the preceding claims, **characterized in that**, when seen in the longitudinal direction, the outer shelf frame (16") rises from a plane just above the chassis bracket frame (21") by way of a cranked formation (13") in front of the rear weighing cells (31) and runs up to an upper plane which is completely above the rear lateral weighing cells (31).

14. Stack of multiple shopping trolleys (100") according to Claim 13, **characterized**
- **in that** the longitudinal-direction position of the cranked formation (13") on the chassis bracket frame (21") is selected in such a way that the front, lowered part of the lower shopping-item receptacle (12") is sufficiently long to prevent the chassis bracket frame (21") of a rear shopping trolley (100") from striking the rear lateral weighing cells (31) of a front shopping trolley (100") when the trolleys are pushed one into the other, and
- **in that** the cranked formation (13") on the rear shopping trolley (100") in the stack is situated in front of the protective elements (17") on the rear lateral weighing cells (31) of the front shopping trolley (100").

15. Stack of multiple shopping trolleys (100") according to at least one of preceding Claims 1 to 14, **characterized in that**, at the shopping trolleys (100"), in each case one display unit (40") is fastened to an upper transverse strut (24.1") in the vertical frame (24"), and **in that** the display units (40") are connected to the upper transverse strut (24.1") on a holding plate (43") which is angled by a bend, wherein the angled holding plate (43") is positioned in such a way that a handlebar (25") of a front shopping trolley (100") is able to be positioned in the region at the rear of the display unit (40") of the rear shopping trolley (100") that is free due to the bend.

## Revendications

1. Chariot de courses (100 ; 100' ; 100" ) empilable, comprenant au moins :
- un châssis (20 ; 20' ; 20'') avec un cadre à étrier inférieur (21 ; 21' ; 21") de châssis en forme de V ou de U avec des roulettes (22, 23) et avec un cadre vertical (24 ; 24") avec au moins deux montants latéraux (24.3, 24.4 ; 24.3'', 24.4''),
- une unité de réception d'articles d'achat (10 ; 10' ; 10''), laquelle comporte un réceptacle supérieur (11) d'articles d'achat et un réceptacle inférieur (12 ; 12' ; 12'') d'articles d'achat disposé à distance verticalement par rapport à celui-ci,
le chariot de courses (100 ; 100' ; 100") étant réalisé de manière empilable sur le réceptacle inférieur (12 ; 12') d'articles d'achat par une forme conique se rétrécissant vers l'avant du cadre à étrier (21 ; 21' ; 21'') de châssis et par un élément de dépôt (14 ; 14") mobile pouvant être soulevé au moins sur l'extrémité arrière ;
- l'unité de réception (10 ; 10' ; 10'') d'articles d'achat étant montée sur le châssis (20 ; 20 ; 20'') par au moins trois cellules de pesage (31, 32) dont une cellule de pesage (31) est disposée sur les deux sections arrière du cadre à étrier (21 ; 21' ; 21") de châssis et au moins une cellule de pesage (32) est disposée dans une zone avant du cadre à étrier (21 ; 21' ; 21") de châssis ;
- le cadre à étrier (21 ; 21' ; 21") de châssis étant disposé dans une direction de déplacement devant les montants latéraux (24.3, 24.4 ; 24.3", 24.4") du cadre vertical (24 ; 24") ;
- **caractérisé en ce que** le cadre vertical (24 ; 24'') possède sur l'extrémité inférieure une section de profil de support (28 ; 28''), qui se raccorde à angle droit au cadre à étrier (21 ; 21' ; 21'') de châssis, les cellules de pesage latérales arrière (31) étant disposées sur le cadre à étrier (21 21' ; 21'') de châssis à côté de et devant la section de profil de support (28 ; 28''), et
- que la section de profil de support (28 ; 28") présente dans le sens de la largeur du chariot de courses (100 ; 100' ; 100"), une largeur de profil plus grande que la section de profil s'y raccordant du cadre à étrier (21 ; 21' ; 21'') de châssis.

2. Chariot de courses (100 ; 100' ; 100" ) selon la revendication 1, **caractérisé en ce que** l'élément de dépôt (14 ; 14' ; 14'') du réceptacle inférieur (12 ; 12' ; 12'') d'articles d'achat est compris par un cadre de dépôt (16 ; 16' ; 16''), qui est positionné au-dessus de l'arête supérieure respective des cellules de pesage (31, 32) et qui s'étend vers l'arrière jusqu'au-dessus des cellules de pesage latérales arrière (31) dans le sens longitudinal.

3. Chariot de courses (100 ; 100' ; 100") selon la revendication 2, **caractérisé en ce que** l'extrémité arrière de l'élément de dépôt (14 ; 14' ; 14'') est suspendue sur un étrier (16.3 ; 16.3") de montage, qui s'étend transversalement au-dessus d'une section arrière du cadre de dépôt (16 ; 16' ; 16'') et qui est positionné au-dessus des cellules de pesage latérales arrière (31).

4. Chariot de courses (100 ; 100' ; 100") selon la revendication 2 ou 3, **caractérisé en ce que** le cadre de dépôt (16 ; 16' ; 16") se situe à l'intérieur du contour de base du cadre à étrier (21 ; 21' ; 21") de châssis.

5. Chariot de courses (100 ; 100' ; 100") selon l'une des revendications 2 à 4, **caractérisé en ce que** le réceptacle supérieur (11) d'articles d'achat est réalisé à la manière d'une panière et comporte une forme conique se rétrécissant vers l'avant et possède un rabat (11.2) de paroi arrière pivotant.

6. Chariot de courses (100 ; 100' ; 100") selon l'une des revendications 1 à 5, **caractérisé en ce qu'**une cellule de pesage avant (32) est positionnée sur une traverse (26) derrière la zone avant du cadre à étrier (21) de châssis ou dans un espace intermédiaire entre la zone avant du cadre à étrier (21'') de châssis et une traverse (27'') insérée dans celui-ci en tant que butée d'empilement.

7. Chariot de courses (100 ; 100') selon l'une des revendications 2 à 6, **caractérisé en ce que** le cadre de dépôt (16 ; 16') est placé dans la zone arrière au-dessus de consoles (16.4 ; 16.4') installées sur le côté sur les cellules de pesage arrière (31), lesquelles se trouvent sur le cadre à étrier (21 ; 21') de châssis.

8. Chariot de courses (100'') selon au moins l'une des revendications précédentes, **caractérisé en ce qu'**est disposé, dans la zone avant du châssis (20"), un boîtier électronique (41"), qui est placé, vu en plan, entre les roulettes avant (22) et une traverse (27'') insérée dans le cadre à étrier (21'') de châssis en tant que butée d'empilement.

9. Chariot de courses (100'') selon la revendication 8, **caractérisé en ce que** la cellule de pesage avant se trouve à l'intérieur du boîtier électronique (41"), au moins un évidement, par lequel l'unité de réception (10'') d'articles d'achat est placée sur la cellule de pesage avant (32), étant prévu sur le côté supérieur du boîtier électronique (41'').

10. Chariot de courses (100' ; 100") selon l'une des revendications précédentes, **caractérisé en ce que** le réceptacle inférieur (12' ; 12") d'articles d'achat comporte sur deux côtés du châssis (20'; 20") respectivement au moins un élément de protection arrière latéral (17''), qui s'étend respectivement au moins jusqu'au côté extérieur des cellules de pesage arrière (31).

11. Chariot de courses (100'') selon la revendication 10, **caractérisé en ce**
- **que** l'élément de protection arrière (17'') est formé à partir d'une section de profil en forme de U ou comprend une section de ce type, qui est retournée par son côté ouvert depuis le haut par-dessus la cellule de pesage latérale arrière (31) et qui repose sur une surface de contact prévue pour le pesage de la cellule de pesage (31), et
- **que** l'unité de réception (10") d'articles d'achat est reliée aux éléments de protection arrière (17'').

12. Chariot de courses (100'') selon la revendication 11, **caractérisé en ce que** le réceptacle supérieur (11) d'articles d'achat et le réceptacle inférieur (12 ; 12' ; 12'') d'articles d'achat sont reliés l'un à l'autre par des entretoises (15'') et que les entretoises (15'') sont directement reliées au côté supérieur de la branche centrale de l'élément de protection (17'') au profil en forme de U.

13. Chariot de courses (100'') selon au moins l'une des revendications précédentes, **caractérisé en ce que** le cadre de dépôt extérieur (16''), vu dans le sens longitudinal, monte, depuis un plan situé étroitement au-dessus du cadre à étrier (21'') de châssis à travers une partie coudée (13'') devant les cellules de pesage arrière (31) et file jusque dans un plan supérieur, qui se trouve totalement au-dessus des cellules de pesage latérales arrière (31).

14. Pile de plusieurs chariots de courses (100'') selon la revendication 13, **caractérisée en ce**
- **que** la position de la partie coudée (13'') dans le sens longitudinal sur le cadre à étrier (21'') de châssis est choisie de telle sorte que la partie avant abaissée du réceptacle inférieur (12'') d'articles d'achat est suffisamment longue pour que le cadre à étrier (21'') de châssis d'un chariot de courses (100'') arrière ne puisse pas heurter les cellules de pesage latérales arrière (31) d'un chariot de courses (100'') avant lors de l'enfilement l'un dans l'autre et
- **que** la partie coudée (13'') sur le chariot de courses (100'') arrière dans la pile se trouve sur les cellules de pesage latérales arrière (31) du chariot de courses (100") avant devant les éléments de protection (17").

15. Pile de plusieurs chariots de courses (100") selon au moins l'une des revendications 1 à 14, **caractérisée en ce que** respectivement une unité d'affichage (40") est fixée sur une traverse supérieure (24.1") dans le cadre vertical (24") sur le chariot de courses (100'') et que les unités d'affichage (40'') sont reliées à la traverse supérieure (24.1") sur une tôle de maintien (43") inclinée par une articulation, la tôle de maintien (43'') inclinée étant positionnée de telle sorte qu'une barre de préhension (25") d'un chariot de courses (100") avant peut être positionnée sur le côté arrière de l'unité d'affichage (40'') du chariot de courses (100'') arrière dans la zone libre du fait de l'articulation.
